# EUROPEAN PATENT SPECIFICATION

(11) **EP 3 068 509 B1**
(45) Date of publication and mention of the grant of the patent: **31.07.2019**
(21) Application number: 13895878.0
(22) Date of filing: 22.10.2013
(51) Int. Cl.: B01D 3/08, B01D 53/14, B01D 53/18, B01D 53/62, B01D 53/78

(54) **APPARATUS AND METHOD FOR ABSORBING CO2 FROM FLUE GAS**
VORRICHTUNG UND VERFAHREN ZUR ABSORPTION VON CO2 AUS RAUCHGAS
APPAREIL ET PROCÉDÉ D'ABSORPTION DU CO2 À PARTIR DE FUMÉES

(43) Date of publication of application: 21.09.2016
(73) Proprietor: Compact Carbon Capture AS, 5006 Bergen (NO)
(72) Inventor: FIVELAND, Torbjørn, N-3721 Skien (NO); ANDERSEN, Henrik Solgaard, N-3152 Tolvsrød (NO); EIMER, Dag, N-3931 Porsgrunn (NO); STRAND, Asbjørn, 5004 Bergen (NO); MANGER, Eirik, N-3960 Stathelle (NO)
(74) Representative: J A Kemp
(86) International application number: PCT/NO2013/050179
(87) International publication number: WO 2015/060724

(56) References cited:
- WO-A1-2012/076657
- WO-A1-2012/092981
- CN-A- 102 240 461
- US-A- 2 176 982
- US-A1- 2004 265 199
- US-A1- 2011 131 937

## Description

### Field of invention

The present invention relates to an apparatus and a method for absorbing C0₂ from flue gas.

### Background of invention

A conventional design of a plant used for carbon dioxide removal from flue gas comprises a separate boiler, followed by a cooler for the gas before the carbon dioxide is removed in an absorption column where the flue gas is contacted counter-currently to an absorbent flowing downwards. The process units for such a plant are bulky and require instrumentation and control, in addition to a complex piping system to connect the various units.

The document US2003/0089232 describes a method and device for removal of C0₂ from flue gas. The method comprises that the gas stream is brought in contact with one or more functional elements attached to, and rotating with, a hollow, rotating axle arranged in a gas duct and where fluids effecting the gas treatment flow through the functional element. The device comprises means for recovery of thermal energy from hot exhaust gas by a rotating heat transfer element mounted in the duct and means for recovery of kinetic energy in the pressurized gas if there is a sufficient pressure in the gas.

The device described in US2003/0089232 provides improvements in the field of technology by reducing the complexity of the gas processing intended by enabling installation of all relevant processing and/or contacting devices in the gas duct itself, thus reducing the need for piping. Furthermore the device is compact and it reduces the need for piping by building the device into the exhaust gas duct.

However it is important to reduce the CO₂ footprint from the industry and power production plants, thus there is a need to further reduce the CO₂ content in the flue gas, and to improve the energy efficiency of a plant used for carbon dioxide removal from flue gas.

WO 2012/092981 A1 discloses background information.

### Summary of invention

The invention provides an apparatus as defined in independent claim 1 and a process as defined in independent claim 10. Further advantageous features and embodiments are defined in the dependent claims.

The apparatus according to the invention, also referred to as a compact atmospheric rotating absorber (CARA), is advantageous in that it comprises a rotating drum, a main cylinder, which is provided in the flue gas duct. The drum is at least divided into an absorption section, a droplet removal section and a washing section which all rotate together with the drum.

Conventional technology has restrictions regarding maximum viscosity of the absorbent. This limits the range of chemicals that may be used and the concentration. The present invention allows for operation with highly viscous liquids as absorption liquids due to that the absorption process is carried out by forcing droplets of absorption liquid to move in a cross-flow direction to the flue gas flow by aid of centrifugal force. The droplets of viscous absorption liquid are thereby efficiently distributed in the gas flow.

The apparatus according to the invention, the compact atmospheric rotating absorber is also advantageous in that it comprises droplet disintegration means attached to the drum, the main cylinder, and is arranged to rotate together with the drum. The disintegration means are constructed to disintegrate and finely atomize droplets of absorption liquid. The droplet disintegration means comprises a plurality of rotatable cylinders of permeable material such as densely perforated plates. The plurality of perforated cylinders have different radius and are coaxially arranged inside the main cylinder and rotate together with the main cylinder. The droplets of absorption liquid pass through the perforations of the cylinders when the droplets move in the cross flow direction and the gas flow passes axially between the perforated cylinders.

The rotation of the droplet disintegration means increases the turbulence in the gas and increases the mass transfer of CO₂ from flue gas to the absorbent. Another advantage of the apparatus according to the invention is that the speed difference between the droplets of absorption liquid and the gas stream, the relative speed, is high. This has the benefit that turbulence within the droplets increases, thus absorption is improved.

Another advantage of the apparatus according to the invention is that the CO₂ removal process is improved by washing the cleaned flue gas before venting to the atmosphere thereby reducing the CO₂ footprint. This is achieved by arranging a particular washing section in the drum.

The compact atmospheric rotating absorber according to the invention can also be provided with means for recovering kinetic energy in the absorption liquid and the wash liquid. In one embodiment of the apparatus according to the invention, liquid is removed, drained, from the drum by the use of diffusers such that kinetic energy in the liquid is recovered and converted into hydrodynamic energy, a pressure head, which is used as hydraulic driving force of the drum. This saves energy and may replace pumps downstream.

The apparatus according to the invention can also be provided with means for recovering of kinetic energy in the gas stream. In one embodiment of the invention a turbine is arranged in the gas duct to recover kinetic energy from the gas stream.

Furthermore, the apparatus according to the invention, the compact atmospheric rotating absorber allows that the absorption liquid is recovered and separated into rich absorption liquid and semi lean absorption liquid, such that the semi lean absorption liquid can be recirculated to the apparatus for further use the absorption liquid is thereby used in a very efficient manner.

Known processes for removing CO2 from flue gases consists of very large units. The present invention reduces the size of the absorber by more than 90% in addition to a cost reduction of at least 50%. The apparatus according to the invention provides a compact technology which can be constructed at a factory and transported on site. This will greatly reduce the construction costs.

In this specification the expressions "absorbent" and "absorption liquid" are equal and used for the same matter.

The present invention will now be discussed in more detail with the aid of preferred illustrative embodiments shown in the drawings, in which:
Figure 1 schematically shows a cross sectional view along the length of an apparatus according one embodiment of the invention.
Figure 2 schematically shows an enlargement of a part of the apparatus shown in figure 1.
Figure 3 schematically shows a cross sectional view along the length of an apparatus according another embodiment of the invention.
Figure 4 schematically shows an enlargement of a part of the apparatus according to another embodiment of the invention.
Figure 5 schematically shows a cross sectional view along the length of an apparatus according another embodiment of the invention.
Figure 6 schematically shows a cross sectional view along the length of an apparatus according another embodiment of the invention.
Figure 7 schematically shows a cross sectional view along the line a-a in the enlargement shown in figure 2.

### Detailed description of embodiments of the invention

With reference to the figures, it should be noted that the figures only show details which are important for the understanding of the invention. Moreover, same features are indicated by the same reference number throughout the specification.

It should also be noted that the illustrated apparatus and the features thereof are out of proportion in relation to each other and the indicated features and dimensions thereof are very exaggerated in size in comparison to the size of the drum and casing. The features are shown in this manner for explanatory purposes only.

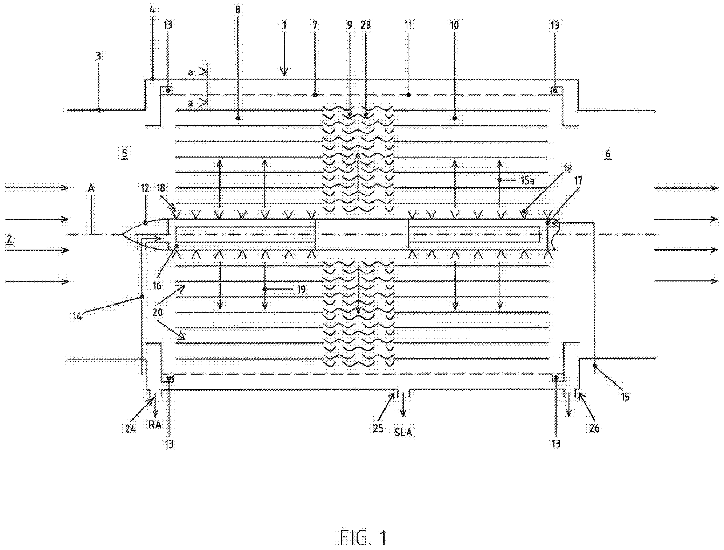

Figure 1 schematically shows an apparatus 1, a compact atmospheric rotary absorber for absorbing CO₂ from a gas stream of flue gas 2 according to the invention. The apparatus is connected to a flue gas duct 3 wherein a gas stream of flue gas containing CO₂ to be treated flows.

Flue gas or exhaust gas from a gas power plant, coal power plant, cement factory or another industrial source enters the apparatus 1 via the gas duct 3 at a velocity in the range of 15-30 m/s.

The compact atmospheric rotating absorber 1 which is provided with a stationary casing 4 having a longitudinal axis, a gas stream inlet 5 and a gas stream outlet 6.

The casing 4 encloses at least one drum 7, also referred to as main cylinder, which is rotatable about the longitudinal axis A inside the casing. The drum 7 is open in both ends, such that flue gas 2 flows through the casing and the drum from the gas stream inlet to the gas stream outlet.

The drum 7 comprises at least one absorption section 8, at least one droplet removal section 9 and at least one washing section 10 arranged in this order in direction of the gas flow. The sections are arranged directly next to each other within the drum. The drum 7 is provided with a mantle surface 11 which functions as the outer perimeter in the radial direction of each section. The drum is further provided with a hollow centre axle 12 arranged coaxial with the rotation axis A of the drum 7. The hollow centre axle 12 is arranged to extend through the absorption section 8, the droplet removal section 9 and the washing section 10. Preferably the hollow centre axle 12 is stationary, however it may also be arranged to rotate about the longitudinal axis.

The design of the absorption, droplet removal and wash sections 8,9,10 will be adjusted according to their intended purpose, however the drum 7 and the sections 8,9,10 therein are arranged and shaped such that the axial movement of the flue gas 2 is not blocked or hindered to avoid pressure loss.

The apparatus 1 is provided with mechanical driving means 13 of conventional type for causing rotation of the drum. This means that the absorption section, the droplet removal section and the washing section rotate about the longitudinal axis A with the same rotational speed.

The drum 7, the main cylinder, rests in bearing arrangements that serve as necessary support and to facilitate rotation at significant speed without undue friction. The number of support points, and thus bearings, will be determined by good mechanical engineering practice. Bearings will be in houses that are cooled as necessary according to good practice.

Absorption liquid 14, preferably lean or semilean absorption liquid, and wash liquid 15 for the gas treatment enters the drum 7 via separate inlet conduits 16, 17. The drum is provided with at least one inlet 16 conduit for absorption liquid and at least one inlet conduit 17 for wash liquid, said inlet conduits being arranged along the rotation axis A of the drum, preferably the inlet conduits 16,17 are arranged axially inside the hollow centre axle.

Figure 1 further show that the absorption section 8 is arranged next to the gas stream inlet 5 of the drum. In the absorption section, carbon dioxide, CO₂ in the flue gas stream 2 is exposed to and treated by absorption liquid whereby CO₂ is absorbed.

The absorption section 8 is provided with spray means 18 arranged along the axis of rotation A of the drum, which are connected to the inlet conduit 16 for absorption liquid. The spray means 18 can be formed like a plurality of nozzles attached to the hollow axle. However, other means for spraying liquids may also be envisaged, such as perforated pipes or similar. The plurality of spray means are evenly distributed about circumference of the hollow axle. In figure 1, the spray means 18, the nozzles, are distributed along the whole length of the part of the hollow axle which is located in the absorption section.

Preferably the spray means 18 are arranged to spray absorption liquid 14 in the radial direction, a cross flow direction, to the flow direction of the passing stream of flue gas containing CO₂, and towards disintegration means.

In operation of the apparatus the drum rotates and a centrifugal force arises which influences the droplets of absorption liquid and causes the droplets to move from the centre in a direction towards the circumference of the drum 7 thereby forming a cross-flow of droplets 19 of absorption liquid 14 in relation to the direction of the gas stream.

The absorption section 8 is further provided with means for disintegration of droplets 20. The purpose of this is to disintegrate, finely atomize, the droplets of absorption liquid, thereby enhancing the absorption process, the mass transfer, of CO₂ from the flue gas 2 to the absorption liquid 14. The means for disintegration 20 of droplets also increase the turbulence inside the droplets which also improves the mass transfer of CO₂.

The means for disintegration of droplets comprises a plurality of cylinders 20 which are coaxial and are arranged to rotate about the longitudinal axis A. Each cylinder 20 of the disintegration means is open in both ends, and has a length which corresponds to the length of the absorption section 8.

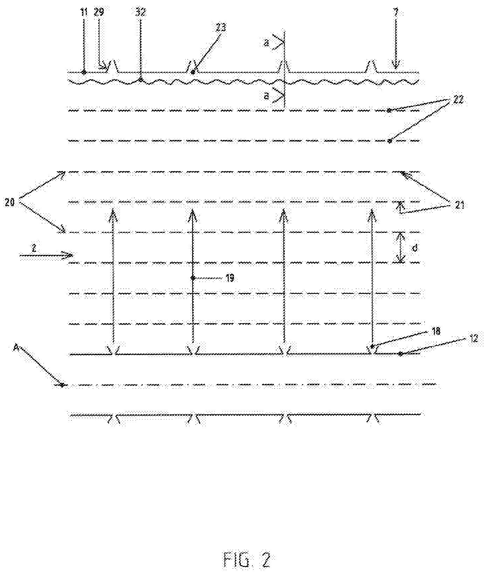

Figure 2 shows an enlargement of a part of the apparatus shown in figure 1. In figure 2 it can be seen that the cylinders 20 are provided with perforated mantle surface 21, in order to let the droplets move from the centre towards the perimeter of the drum 7 and thus passing through the perforations 22 of the mantle surfaces 21 of the plurality of coaxial arranged rotating cylinders 20. The mantle surface 21 of each cylinder is perforated all around the circumference and along the whole length of the cylinder.

Preferably the perforations 22 of the mantle surface are adapted such that the droplets pass through the perforations 22 under influence of centrifugal forces without forming a liquid layer on the inside surface of the cylinder mantle 21. Since the perforated cylinders rotate together with the drum 7, the droplets are disintegrated and finely atomised when passing through the perforations 22, which improves the absorption of CO₂ Trials have shown that it takes about 0.01 - 0.02 seconds for a droplet to move from one cylinder to the next, thus very good mixing inside the droplets is achieved.

The finely atomised absorption liquid droplets provides that large surfaces for mass transfer purpose are exposed to the passing flue gas comprising CO₂.

The average droplet size decreases with distance from the centre and the volume of gas between the cylinders increases further out from the hollow axle which allows for an increased level of absorption of CO₂ The absorption liquid droplets absorbs CO₂ and becomes rich when moving in the radial direction towards the drum, the main cylinder.

The means for disintegration of droplets 20 comprises 3-50 or more coaxial arranged cylinders 20. As can be seen in figure 2, the perforated cylinders 20 are consecutive arranged between the hollow centre axle 12 supporting the spray means 18 and the mantle surface 11 of the drum 7. The cylinders 20 have different radius and are arranged such that every cylinder is larger than the cylinders arranged closer to the hollow centre axle. A radial distance d, a separating space, is arranged between two consecutive arranged cylinders 20 which provides for passage of gas in the axial direction between the cylinders 20 and through the section. The size of the space d is adapted such that the droplets of absorption liquid are exposed to the passing flue gas stream 2 in order to achieve good absorption without blocking or hindering the stream of flue gas. Preferably the separating space is approximately 0,5-5 cm, more preferably 0,5-3 cm. The co-axial perforated cylinders 20 of the droplet disintegration means are fixed in relation to the drum by conventional fastening means not shown in the figure but this may easily be done with use of appropriate stays.

The mantle surface 11 of the drum 7, the main cylinder is provided with a plurality of liquid outlet passages 23, holes, through the mantle surface 11 of the drum. In the absorption section, rich absorption liquid which has absorbed CO₂ is drained from the drum via the holes 23 and is collected by the enclosing casing 4.

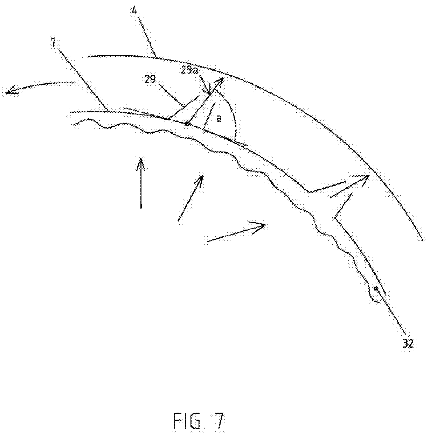

In figure 2 it is further shown that that the mantle surface 11 of the drum 7 according to this embodiment of the invention is provided with means for recovering kinetic energy from the absorption liquid, diffusers 29 connected to the liquid outlet passages 23. The diffusers are not indicated in the embodiment shown in figure 1, however in figure 2 showing the same embodiment, the diffusers 29 are indicated as longitudinally extended tube like passages. The energy recovery means will be further described in detail below in connection with figure 7.

In figure 1 it is shown that the casing 4 is provided with at least one rich absorption liquid outlet conduit 24 and at least one semi lean absorption liquid outlet conduit 25, such that the absorption liquid removed from the drum is directed to different outlets 24, 25 at the lower side of the casing. Preferably the rich absorption liquid outlet conduit 24 is arranged near the gas stream inlet of the casing, and the semi lean absorption liquid outlet conduit 25 is arranged near the droplet removal section 9. The casing may be provided with guiding means for guiding the collected absorption liquid towards the outlet conduits (not shown in the figures). Typically the rich absorption liquid is removed from the apparatus and supplied to a regenerator for absorption liquid.

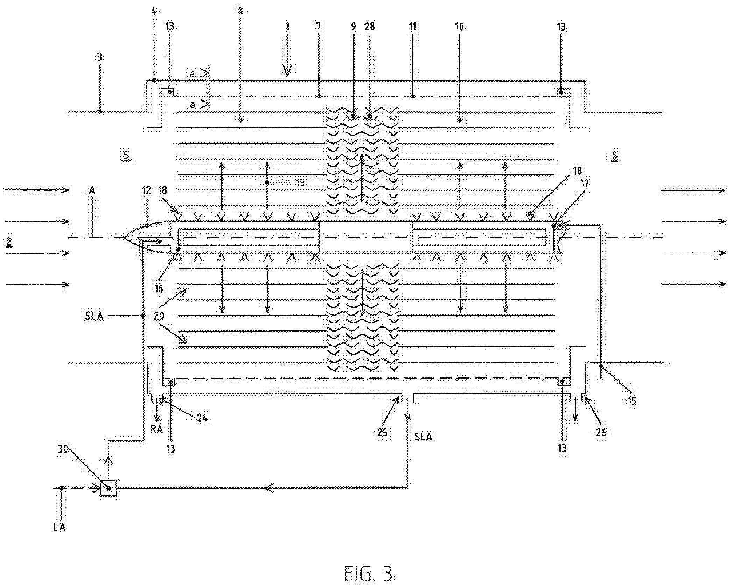

In figure 3 another embodiment of the invention is illustrated where the apparatus is provided with means 30 for recirculation of semi lean absorption liquid, also referred to as SLA, to the inlet conduit 16 for absorption liquid of the apparatus 1. Semilean absorption liquid removed from the apparatus via the semi lean absorption liquid outlet conduit 25 is thereby recycled to the absorption liquid inlet 16 of the apparatus 1 and sprayed into the absorption section to absorb CO₂ from flue gas and exits the apparatus as rich absorption liquid, also referred to as RA, to improve the efficiency of the absorption process.

In another embodiment of the invention, shown as a dashed line in figure 3, the apparatus 1 is adapted such that semi lean absorption liquid SLA removed from the apparatus via the semi lean absorption liquid outlet conduit 25 is added by the means for recirculation 30 to the lean absorption liquid LA shown as a dashed line in figure 3 supplied from a regenerator and supplied to the absorption liquid inlet of the apparatus and sprayed into the absorption section to absorb CO₂ from flue gas and exit the apparatus as rich absorption liquid (RA).

The present invention allows that the absorption liquid used in the absorption process has an amine concentration up to 95% by weight. The absorption liquid comprises one of the following MEA, MDEA, DEA, or a mixture of different amines or other absorbents such as ionic liquid. Furthermore, the centrifugal effect used in absorption process and apparatus according to the invention allows that the absorption liquid has a viscosity of up to 1500 nPa·s.

Preferably the absorption process of absorbing CO₂ from flue gas according to the invention is carried out at atmospheric pressure; however, the apparatus according to the invention may be used also in cases where the gas is pressurized above atmospheric pressure.

During the absorption process some droplets from the absorption section may be carried forwards with the stream of flue gas 2. In order to avoid that droplets of absorption liquid are released to the atmosphere, a droplet removal section 9 is provided directly after the absorption section in the flow direction of the gas stream to remove droplets of absorption liquid from the gas stream. As can be seen in figure 1 the droplet removal section 9 is provided with a packed bed 28 for collecting and removing droplets of absorption liquid from the passing gas stream. The packed bed 28 comprises a material with very high surface area per cubic meter (up to 3000-4000 m²/m³) such as metal foam or the like. The packed bed is arranged to be connected to the drum 7, by conventional attaching means not shown in the figure. Absorption liquid droplets carried over to this section will come in contact with the material and be forced to the outer perimeter by the centrifugal force. The droplets are drained from the droplet removal section 9 via liquid outlet passages 23 arranged on the drum surface 11 The absorption liquid drained from the droplet removal section is typically semi lean, having absorbed some of CO₂ present in the flue gas. The liquid outlet passages 23 are provided as holes through the mantle surface of the drum, as previously described.

When the stream of flue gas flows through absorption section 8 and the droplet removal section 9 some absorption liquid, absorbents, may be "dissolved "in the cleaned flue gas and these droplets of absorption liquid must be removed before the cleaned gas is vented to the atmosphere. Figure 1 show that a washing section 10 is arranged directly after the droplet removal section 9 in the flow direction of the gas stream in order to remove absorption liquid, absorbents, dissolved in the gas stream 2. Preferably the hollow centre axle 12 previously described also extends through the washing section 10 and is provided with spray means 18 to spray wash liquid 15 into the stream of flue gas. Alternatively, the washing section 10 is provided with other types of spray means (not shown in the figure) arranged in the centre of the washing section and connected to the washing liquid inlet conduit 17. The spray means are used for spraying wash liquid, water, into the passing flue gas stream.

Preferably the wash liquid is water. In one embodiment of the invention the pH of the wash liquid is adjusted to further improve the washing process.

Preferably the washing section 10 is also provided with means for disintegration of droplets 20 of the same kind as used in the absorption section as showed in figure 1. The sprayed wash liquid 15a forms a cross-flow of droplets of wash liquid by effect of centrifugal force causing the wash liquid droplets 15a to move in a direction towards the perimeter of the drum thereby coming into contact with the passing gas stream. The plurality of rotating perforated cylinders 20 in the means for disintegration of droplets finely atomizes the droplets of wash liquid which improves the mass transfer of dissolved absorption liquid from the passing flue gas stream. Any absorption liquid dissolved in the passing gas stream will be absorbed by the wash liquid such that flue gas free of absorption liquid can be vented.

The wash liquid is drained from the washing section via a plurality of liquid outlet passages, holes 23 provided in the mantle surface 11 of the drum 7, as previously described. The wash liquid drained from the drum is collected by the casing 4 and removed via a wash liquid outlet conduit 26.

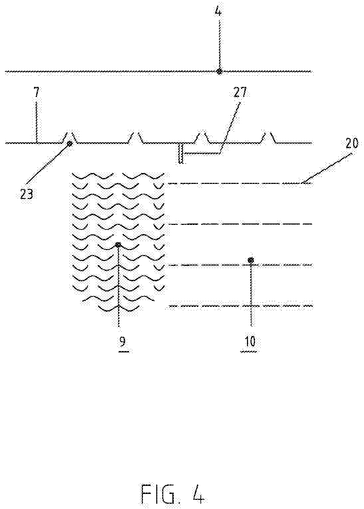

Figure 4 shows an enlargement of another embodiment of apparatus according to the invention wherein the drum surface 11 is provided with at least one ring shaped flange 27 and/ or seal arranged to separate the drop removal section and the washing section. This is advantageous in that liquid is prevented from moving axially along the drum thereby avoiding undesirable dilution of the absorption liquid by washing liquid. Also the inside wall of the casing 4 may be provided with a ring shaped flange and/or a seal to separate the liquids, not shown in the figures. The liquid may drip from the casing "ceiling" back on to the outside surface of the drum 7 from where it will be flung back on to the casing wall, and eventually it will reach the casings lowest point from where it may be drained.

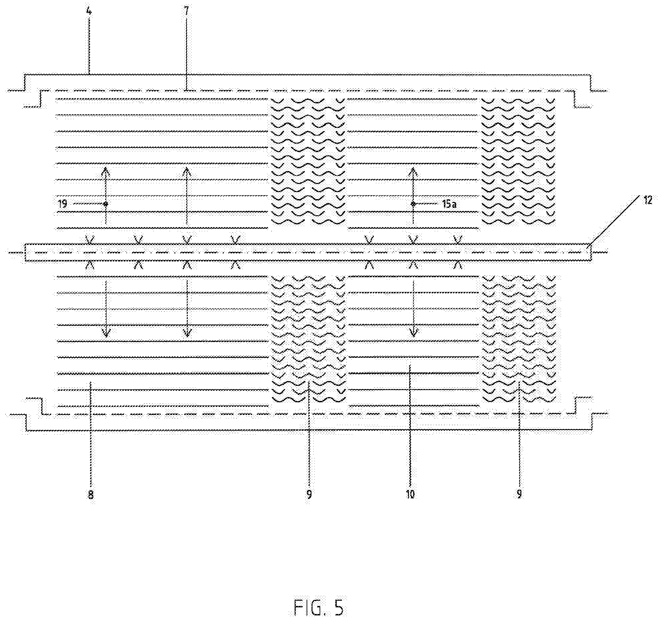

In figure 5 another embodiment of the invention is illustrated, where the washing section 10 is directly followed by at least one additional droplet removal section 9 of the same kind as previously described in order to remove any droplets of wash liquid from the cleaned flue gas in advance of venting the flue gas to the atmosphere.

The apparatus 1 according to the invention also comprises means for recovery of energy from the process. In one embodiment of the invention, shown in figure 1, 2 and 7, means for energy recovery recovers energy from the absorption liquid and/or the wash liquid after having treated the gas. In particular it is the kinetic energy in the liquid layer 32 formed on the inside of the mantle surface 11 of the drum 7 which is recovered. This is achieved by converting the kinetic energy of the liquid layer 32 into a pressure head and using the pressure head as hydraulic driving force for rotating of the drum 7.

Figure 2 and 7 shows enlargements of the energy recovery means. In particular figure 7 schematically shows a cross section along line a-a of the drum 7 and diffuser 29. The means for energy recovery comprises a plurality of diffusers 29 which are connected to the liquid outlet passages 23 on the outside surface of drum mantle 11. The liquid outlet passages 23 are distributed over the entire mantle surface, preferably symmetrically such that unbalance of the drum is avoided. The droplets of absorption liquid and wash liquid move towards the perimeter of the drum, and forms a layer of liquid 32 on the inside of the mantle surface 11 of the drum in every section. The drum is provided with liquid outlet passages 23 draining the liquid from the drum 7, but the size and number of outlet passages are adapted such that there is a liquid layer formed on the inside surface . This has the effect that gas is blocked from passing through liquid outlet passages. Preferably every outlet passage 23 is provided with a diffuser 29 arranged on the outside surface of the mantle. Preferably the diffusers 29 are symmetrically arranged around the circumference of the drum and are arranged along the whole length of the drum.

The diffusers 29 are indicated as longitudinally extended tube like passages in figure 2 and 7. The diffusers are provided with tapered cross section such that the liquid drained from the inside of the drum is accelerated when passing through the diffusers.

The diffuser outlets 29a, are formed such that kinetic energy in the liquid drained from the liquid layer 32, is converted into a pressure head by forcing the absorption liquid and the wash liquid through the plurality of diffusers 29 by centrifugal force. The pressure head in the liquid is converted into a hydraulic driving force contributing to rotational drive of the drum. The diffusers are directed towards the casing and have a diffuser outlet 29a which is directed such that the ejected liquid stream hits the inside of the casing wall, and preferable in the opposite direction to the rotation of the drum. The diffuser outlet 29a is directed such that the angle a between the tangent of drum surface at the outlet passage 23, indicated by a dashed line in figure 7, and the direction of diffuser outlet 29a, indicated by the arrow, is less than perpendicular (a< 90 degrees). This implies that the liquid stream leaving the diffuser outlet 29 is directed to hit the casing 4 such that hydraulic drive of the drum 7 is achieved. In figure 7 the liquid is ejected from the diffusers in a direction towards the casing wall. This saves energy and may replace pumps downstream.

In another embodiment of the invention the rich absorption liquid and the semi lean absorption liquid and the washing liquid are removed, drained from the drum by use of gravity only, the liquid will then flow over an edge and be collected at the bottom before it exits through separate outlets (not shown in the figures).

The cleaned gas leaving the absorption apparatus is provided with a full body rotation, kinetic energy may therefore be recovered from the gas stream leaving the apparatus 1.

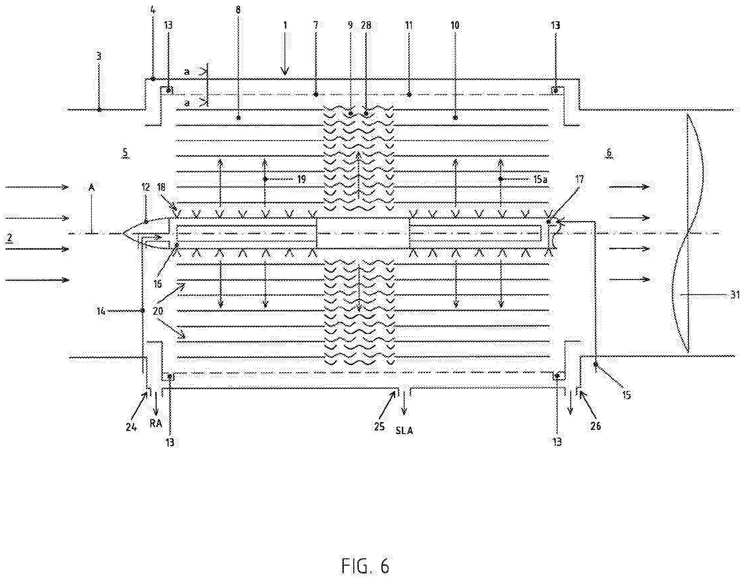

In figure 6 a cross sectional view along the length of an apparatus 1 according to another embodiment of the invention is shown wherein the apparatus 1 is provided with another type of energy recovering means which comprises a gas turbine 31 arranged in the gas stream outlet 6 of the apparatus. Alternatively a turbine may be arranged in the gas stream inlet 5, this is advantageous in that the gas stream is forced to start rotating about the longitudinal direction before entering the absorption apparatus, which improves the absorption process and decreases the pressure drop in the apparatus.

In another embodiment of the invention, the drum is provided with at least one compensating balance duct extending radially through the mantle surface of the drum (not shown in the figures). The balance duct is formed like a short tube which extends radially through the mantle surface of the drum and has a length which exceeds liquid layer formed on the inside of the drum. This has the effect that in case flue gas has passed through the diffusers to the outside of the drum, the flue gas can return into the drum via the balancing ducts, functioning as balancing compensation of the drum.

Even if the apparatus shown in figure 1 only illustrates one absorption section, one droplet removal section and one washing section, it should be understood that there may be more such sections arranged in series within the drum.

In another embodiment of the invention shown in figure 5 the drum 7 is provided with at least one droplet removal section 9 after the washing section 10. This is advantageous in that droplets of washing liquid 15a can be removed from the cleaned flue gas before venting.

In another embodiment of the invention the drum 7 is provided with at least one additional absorption section after the droplet removal section, said additional absorption section being followed by at least one additional droplet removal section and a washing section (not shown in figures). This is advantageous in case the CO₂ content in the cleaned flue gas has to fulfil very strict requirements.

By placing all primary gas processing equipment inside a gas duct, there is by definition no piping between processing equipment. Hence the piping costs are reduced. Since the usual contractions and expansions of gas flow cross-sectional area due to flow from vessel to pipe and from pipe to vessel are removed, pressure drop in the process is also reduced. The transfer of mass is intensified through the increased turbulence around the droplet disintegrating means, the perforated cylinders, by the rotation of the assembly. The units of the processing equipment have been shrunk through this intensification of the process thereby achieving a compact rotary absorption apparatus.

The above-mentioned embodiments, variants and examples of the present invention may be freely combined within the limits of the following claims without departing from the invention.

## Claims

1. An apparatus (1) for absorbing CO₂ from a gas stream of flue gas (2) comprising a stationary casing (4) having a longitudinal axis, a gas stream inlet (5) and a gas stream outlet (6), said casing comprising at least one drum (7) being rotatable about the longitudinal axis (A), said drum having:
- at least one absorption section (8) arranged within the drum (7) provided with spray means (18) for spraying absorption liquid (14) into the stream of flue gas (2) containing CO₂ to form a cross-flow of absorption liquid droplets (19) to the flow direction of the gas stream (2) by aid of centrifugal force, and having means for disintegration (20) of droplets, wherein said means for disintegration (20) of droplets comprises a plurality of coaxially arranged cylinders (20) provided to rotate about the longitudinal axis (A), said cylinders being provided with perforated mantle surfaces (21);
- at least one droplet removal section (9) arranged after the absorption section (8) in the flow direction of the gas stream;
- at least one washing section (10) arranged after the droplet removal section (9) in the flow direction of the gas stream; and
- said apparatus (1) having means for rotating (13) the drum such that the absorption section (8), the droplet removal section (9) and the washing section (10) rotate about the longitudinal axis (A) together.

2. An apparatus according to claim 1 wherein the washing section (10) is provided with spray means (18) for spraying wash liquid (15) into the passing gas stream (2).

3. An apparatus according to claim 1 or 2 wherein the washing section (10) is provided with means for disintegration (20) of droplets, such as a plurality of coaxially arranged cylinders (20) provided to rotate about the longitudinal axis (A), said cylinders being provided with perforated mantle surfaces (21).

4. An apparatus according to any of the preceding claims wherein the washing section (10) is directly followed by at least one droplet removal section (9) in the flow direction of the gas stream.

5. An apparatus according to any of the preceding claims wherein the spray means (18) are arranged along the axis of rotation (A) of the drum, and said spray means (18) being arranged to spray absorption liquid (19) in a cross-flow direction to the passing gas stream.

6. An apparatus according to any of the preceding claims wherein one or more of the absorption section (8), the droplet removal section (9) and/or the washing section (10) are provided with a plurality of liquid outlet passages (23), the liquid outlet passages being provided as holes (23) through the mantle surface (11) of the drum.

7. An apparatus according to any of the preceding claims further comprising means for energy recovery, wherein the means for energy recovery (29) is arranged to recover energy from the absorption liquid and/or the wash liquid; and
the means for energy recovery comprises a plurality of diffusers (29) which are connected to the liquid outlet passages (23) on the outside surface of drum mantle (21), wherein the plurality of diffusers (29) are configured to eject the absorption liquid and/or wash liquid in an opposite direction to the rotation of the drum (7) such that hydraulic drive of the drum (7) is achieved.

8. An apparatus according to claim 7, wherein the diffusers (29) are symmetrically arranged around the circumference of the drum (7) and/or are arranged along the whole length of the drum (7).

9. An apparatus according to any of the preceding claims, further comprising means for energy recovery, wherein the means for energy recovery comprises a gas turbine (31) arranged to recover kinetic energy in the gas stream (2).

10. A process for absorbing CO₂ from a gas stream of flue gas (2) comprising the steps of:
- supplying flue gas containing CO₂ and supplying absorption liquid (14) to a drum (7) being rotatable about a longitudinal axis (A), said drum having at least one absorption section (8), at least one droplet removal section (9) and at least one washing section (10);
- rotating the drum (7) and the absorption section (8), the droplet removal section (9) and the washing section (10);
- spraying absorption liquid (14) into the flue gas stream in the absorption section (8);
- forming a cross-flow of droplets (19) of absorption liquid to the flow direction of the gas stream and causing the droplets to move by aid of centrifugal force towards the perimeter of the drum (7);
- absorbing CO₂ from the flue gas stream (2);
- disintegrating the droplets of absorption liquid (19), wherein the disintegration of the droplets comprises forcing droplets to pass through perforations (22) arranged on a plurality of coaxially arranged cylinders (20) having perforated mantle surfaces (21);
- removing the droplets of absorption liquid from the gas stream;
- spraying a wash liquid (15) into the gas stream to absorb absorption liquid dissolved in the gas stream; and
forming a cross-flow of droplets (15a) of wash liquid and causing the wash liquid droplets to move in a direction towards the circumference of the drum.

11. A process according to claim 10 comprising disintegrating the droplets of wash liquid during the movement towards the circumference of the drum (7).

12. A process according to any of claims 10 or 11 wherein the absorption liquid (14) and/or the wash liquid is sprayed in a cross-flow direction (19) to the flow direction of the gas stream.

13. A process according to any of claims 10 to 12, further comprising recovery energy from the liquid and/or the gas, wherein recovering energy from the liquid comprises ejecting the absorption liquid and/or wash liquid, drained from a liquid layer (32) by diffusers (29) in the drum (7) in an opposite direction to the rotation of the drum (7) such that hydraulic drive of the drum (7) is achieved.

14. A process according to any of claims 10 to 13 comprising rotating the drum by hydraulic drive from liquid drained by diffusers (29) from the drum (7).

15. A process according to any of claims 10 to 14, further comprising recovering energy from the liquid and/or gas, wherein energy is recovered from the gas by a gas turbine.

## Patentansprüche

1. Vorrichtung (1) zum Absorbieren von CO₂ aus einem Gasstrom von Rauchgas (2), die ein stationäres Gehäuse (4) mit einer Längsachse, einem Gasstromeinlass (5) und einem Gasstromauslass (6) umfasst, wobei das Gehäuse mindestens eine Trommel (7) umfasst, die um die Längsachse (A) drehbar ist, wobei die Trommel Folgendes aufweist:
- mindestens einen Absorptionsabschnitt (8), der in der Trommel (7) angeordnet ist und mit Sprühmitteln (18) bereitgestellt ist zum Sprühen von Absorptionsflüssigkeit (14) in den Strom von Rauchgas (2), der CO₂ enthält, um eine Querströmung von Absorptionsflüssigkeitstropfen (19) zur Strömungsrichtung des Gasstroms (2) mithilfe von Zentrifugalkraft zu bilden, und der Mittel zum Zerfall (20) von Tropfen aufweist, wobei das Mittel zum Zerfall (20) von Tropfen eine Vielzahl von koaxial angeordneten Zylindern (20) umfasst, die bereitgestellt sind, um sich um die Längsachse (A) zu drehen, wobei die Zylinder mit perforierten Manteloberflächen (21) bereitgestellt sind;
- mindestens einen Tropfenentfernungsabschnitt (9), der nach dem Absorptionsabschnitt (8) in der Strömungsrichtung des Gasstroms angeordnet ist;
- mindestens einen Waschabschnitt (10), der nach dem Tropfenentfernungsabschnitt (9) in der Strömungsrichtung des Gasstroms angeordnet ist; und
- wobei die Vorrichtung (1) Mittel zum Drehen (13) der Trommel aufweist, sodass sich der Absorptionsabschnitt (8), der Tropfenentfernungsabschnitt (9) und der Waschabschnitt (10) zusammen um die Längsachse (A) drehen.

2. Vorrichtung nach Anspruch 1, wobei der Waschabschnitt (10) mit Sprühmitteln (18) zum Sprühen von Waschflüssigkeit (15) in den passierenden Gasstrom (2) bereitgestellt ist.

3. Vorrichtung nach Anspruch 1 oder 2, wobei der Waschabschnitt (10) mit Mitteln zum Zerfall (20) von Tropfen bereitgestellt ist, wie zum Beispiel einer Vielzahl von koaxial angeordneten Zylindern (20), die bereitgestellt sind, um sich um die Längsachse (A) zu drehen, wobei die Zylinder mit perforierten Manteloberflächen (21) bereitgestellt sind.

4. Vorrichtung nach einem der vorhergehenden Ansprüche, wobei direkt auf den Waschabschnitt (10) mindestens ein Tropfenentfernungsabschnitt (9) in der Strömungsrichtung des Gasstroms folgt.

5. Vorrichtung nach einem der vorhergehenden Ansprüche, wobei die Sprühmittel (18) entlang der Drehachse (A) der Trommel angeordnet sind und wobei die Sprühmittel (18) angeordnet sind, um Absorptionsflüssigkeit (19) in eine Querströmungsrichtung zu dem passierenden Gasstrom zu sprühen.

6. Vorrichtung nach einem der vorhergehenden Ansprüche, wobei einer oder mehrere des Absorptionsabschnitts (8), des Tropfenentfernungsabschnitts (9) und/oder des Waschabschnitts (10) mit einer Vielzahl von Flüssigkeitsauslassdurchgängen (23) bereitgestellt sind, wobei die Flüssigkeitsauslassdurchgänge als Löcher (23) durch die Manteloberfläche (11) der Trommel bereitgestellt sind.

7. Vorrichtung nach einem der vorhergehenden Ansprüche, ferner umfassend Mittel zur Energiegewinnung, wobei das Mittel zur Energierückgewinnung (29) angeordnet ist, um Energie aus der Absorptionsflüssigkeit und/oder der Waschflüssigkeit rückzugewinnen; und
das Mittel zur Energierückgewinnung eine Vielzahl von Diffusoren (29) umfasst, die mit den Flüssigkeitsauslassdurchgängen (23) an der Außenfläche des Trommelmantels (21) verbunden sind, wobei die Vielzahl von Diffusoren (29) konfiguriert sind, um die Absorptionsflüssigkeit und/oder Waschflüssigkeit in einer der Drehung der Trommel (7) entgegengesetzten Richtung auszustoßen, sodass ein Hydraulikantrieb der Trommel (7) erreicht wird.

8. Vorrichtung nach Anspruch 7, wobei die Diffusoren (29) symmetrisch um den Umfang der Trommel (7) angeordnet sind und/oder entlang der gesamten Länge der Trommel (7) angeordnet sind.

9. Vorrichtung nach einem der vorhergehenden Ansprüche, ferner umfassend Mittel zur Energierückgewinnung, wobei das Mittel zur Energierückgewinnung eine Gasturbine (31) umfasst, die angeordnet ist, um kinetische Energie in dem Gasstrom (2) rückzugewinnen.

10. Verfahren zum Absorbieren von CO₂ aus einem Gasstrom von Rauchgas (2), das die folgenden Schritte umfasst:
- Zuführen von Rauchgas, das CO₂ enthält, und Zuführen von Absorptionsflüssigkeit (14) einer Trommel (7), die um eine Längsachse (A) drehbar ist, wobei die Trommel mindestens einen Absorptionsabschnitt (8), mindestens einen Tropfenentfernungsabschnitt (9) und mindestens einen Waschabschnitt (10) aufweist;
- Drehen der Trommel (7) und des Absorptionsabschnitts (8), des Tropfenentfernungsabschnitts (9) und des Waschabschnitts (10);
- Sprühen von Absorptionsflüssigkeit (14) in den Rauchgasstrom in dem Absorptionsabschnitt (8);
- Bilden einer Querströmung von Absorptionsflüssigkeitstropfen (19) zu der Strömungsrichtung des Gasstroms und Bewirken, dass sich die Tropfen mithilfe von Zentrifugalkraft in Richtung des Umfangs der Trommel (7) bewegen;
- Absorbieren von CO₂ aus dem Rauchgasstrom (2);
- Zerfallen der Absorptionsflüssigkeitstropfen (19), wobei der Zerfall der Tropfen ein Erzwingen, dass die Tropfen Perforationen (22) durchlaufen, die an einer Vielzahl von koaxial angeordneten Zylindern (20) mit perforierten Manteloberflächen (21) angeordnet sind, umfasst;
- Entfernen der Absorptionsflüssigkeitstropfen aus dem Gasstrom;
- Sprühen einer Waschflüssigkeit (15) in den Gasstrom, um Absorptionsflüssigkeit, die in dem Gasstrom gelöst ist, zu absorbieren; und
Bilden einer Querströmung von Waschflüssigkeitstropfen (15a) und Bewirken, dass sich die Tropfen in eine Richtung in Richtung des Umfangs der Trommel bewegen.

11. Verfahren nach Anspruch 10, umfassend ein Zerfallen der Waschflüssigkeitstropfen während der Bewegung in Richtung des Umfangs der Trommel (7).

12. Verfahren nach einem der Ansprüche 10 oder 11, wobei die Absorptionsflüssigkeit (14) und/oder die Waschflüssigkeit in eine Querströmungsrichtung (19) zu der Strömungsrichtung des Gasstroms gesprüht wird.

13. Verfahren nach einem der Ansprüche 10 bis 12, ferner umfassend Rückgewinnungsenergie aus der Flüssigkeit und/oder dem Gas, wobei ein Rückgewinnen von Energie aus der Flüssigkeit ein Ausstoßen der Absorptionsflüssigkeit und/oder der Waschflüssigkeit, die von einer Flüssigkeitsschicht (32) durch Diffusoren (29) in der Trommel (7) in einer der Drehung der Trommel (7) entgegengesetzten Richtung abgeleitet wurde, sodass ein Hydraulikantrieb der Trommel (7) erreicht wird, umfasst.

14. Verfahren nach einem der Ansprüche 10 bis 13, umfassend ein Drehen der Trommel durch Hydraulikantrieb von Flüssigkeit, die von Diffusoren (29) von der Trommel (7) abgeleitet ist.

15. Verfahren nach einem der Ansprüche 10 bis 14, ferner umfassend ein Rückgewinnen von Energie aus der Flüssigkeit und/oder dem Gas, wobei Energie aus dem Gas durch eine Gasturbine rückgewonnen wird.

## Revendications

1. Appareil (1) d'absorber du CO₂ d'un flux de gaz de fumées (2) comprenant un boîtier fixe (4) présentant un axe longitudinal, une entrée de flux de gaz (5) et une sortie de flux de gaz (6), ledit boîtier comprenant au moins un tambour (7) étant rotatif autour de l'axe longitudinal (A), ledit tambour comportant :
- au moins une section d'absorption (8) disposée dans le tambour (7) dotée de moyens de pulvérisation (18) destinés à pulvériser un liquide d'absorption (14) dans le flux de fumées (2) contenant du CO₂ pour former un écoulement transversal de gouttelettes de liquide d'absorption (19) vers le sens d'écoulement du flux de gaz (2) à l'aide de la force centrifuge, et comportant un moyen de désagrégation (20) de gouttelettes, ledit moyen de désagrégation (20) de gouttelettes comprenant une pluralité de cylindres disposés coaxialement (20) prévus pour tourner autour de l'axe longitudinal (A), lesdits cylindres étant dotés de surfaces de revêtement perforées (21) ;
- au moins une section de retrait de gouttelette (9) disposée après la section d'absorption (8) dans le sens d'écoulement du flux de gaz ;
- au moins une section de lavage (10) disposée après la section de retrait de gouttelette (9) dans le sens d'écoulement du flux de gaz ; et
- ledit appareil (1) comportant un moyen de rotation (13) du tambour de manière que la section d'absorption (8), la section de retrait de gouttelette (9) et la section de lavage (10) tournent autour de l'axe longitudinal (A) ensemble.

2. Appareil selon la revendication 1, dans lequel la section de lavage (10) est dotée de moyens de pulvérisation (18) destinés à pulvériser un liquide de lavage (15) dans le flux de gaz qui passe (2).

3. Appareil selon la revendication 1 ou 2, dans lequel la section de lavage (10) est dotée d'un moyen de désagrégation (20) de gouttelettes, tel qu'une pluralité de cylindres disposés coaxialement (20) prévus pour tourner autour de l'axe longitudinal (A), lesdits cylindres étant dotés de surfaces de revêtement perforées (21).

4. Appareil selon l'une quelconque des revendications précédentes dans lequel la section de lavage (10) est directement suivie d'au moins une section de retrait de gouttelette (9) dans le sens d'écoulement du flux de gaz.

5. Appareil selon l'une quelconque des revendications précédentes, dans lequel les moyens de pulvérisation (18) sont disposés le long de l'axe de rotation (A) du tambour, et lesdits moyens de pulvérisation (18) étant conçus pour pulvériser un liquide d'absorption (19) dans un sens d'écoulement transversal vers le flux de gaz qui passe.

6. Appareil selon l'une quelconque des revendications précédentes, dans lequel la section d'absorption (8), la section de retrait de gouttelette (9) et/ou la section de lavage (10) sont dotées d'une pluralité de passages de sortie de liquide (23), les passages de sortie de liquide étant prévus sous forme d'orifices (23) à travers la surface de revêtement (11) du tambour.

7. Appareil selon l'une quelconque des revendications précédentes comprenant en outre un moyen de récupération d'énergie, le moyen de récupération d'énergie (29) étant conçu pour récupérer l'énergie du liquide d'absorption et/ou du liquide de lavage ; et
le moyen de récupération d'énergie comprenant une pluralité de diffuseurs (29) qui sont reliés aux passages de sortie de liquide (23) sur la surface extérieure d'une enveloppe de tambour (21), la pluralité de diffuseurs (29) étant conçus pour éjecter le liquide d'absorption et/ou le liquide de lavage dans un sens opposé à la rotation du tambour (7) de manière qu'une commande hydraulique du tambour (7) est obtenue.

8. Appareil selon la revendication 7, dans lequel les diffuseurs (29) sont agencés de manière symétrique autour de la circonférence du tambour (7) et/ou sont agencés sur toute la longueur du tambour (7).

9. Appareil selon l'une quelconque des revendications précédentes comprenant en outre un moyen de récupération d'énergie, dans lequel le moyen de récupération d'énergie comprend une turbine à gaz (31) conçue pour récupérer l'énergie cinétique dans le flux de gaz (2).

10. Procédé d'absorption du CO₂ d'un flux de gaz de fumées (2) comprenant les étapes de :
- fourniture de fumées contenant du CO₂ et fourniture d'un liquide d'absorption (14) à un tambour (7) pouvant être tourné autour d'un axe longitudinal (A), ledit tambour présentant au moins une section d'absorption (8), au moins une section de retrait de gouttelette (9) et au moins une section de lavage (10) ;
- rotation du tambour (7) et de la section d'absorption (8), de la section de retrait de gouttelette (9) et de la section de lavage (10) ;
- pulvérisation d'un liquide d'absorption (14) dans le flux de fumées dans la section d'absorption (8) ;
- formation d'un écoulement transversal de gouttelettes (19) d'un liquide d'absorption vers le sens d'écoulement du flux de gaz et le fait d'inciter les gouttelettes à se déplacer à l'aide d'une force centrifuge vers le périmètre du tambour (7) ;
- absorption du CO₂ à partir du flux de fumées (2) ;
- désagrégation des gouttelettes du liquide d'absorption (19), la désagrégation des gouttelettes comprenant le fait d'obliger les gouttelettes à passer par des perforations (22) disposées sur une pluralité de cylindres disposés coaxialement (20) présentant des surfaces à revêtement perforées (21) ;
- retrait des gouttelettes du liquide d'absorption du flux de gaz ;
- pulvérisation d'un liquide de lavage (15) dans le flux de gaz pour absorber un liquide d'absorption dissous dans le flux de gaz ; et
formation d'un écoulement transversal de gouttelettes (15a) du liquide de lavage et incitation de gouttelettes de liquide de lavage à se déplacer dans un sens vers la circonférence du tambour.

11. Procédé selon la revendication 10 comprenant la désagrégation des gouttelettes du liquide de lavage pendant le mouvement vers la circonférence du tambour (7).

12. Procédé selon l'une quelconque des revendications 10 ou 11, dans lequel le liquide d'absorption (14) et/ou le liquide de lavage est pulvérisé dans le sens de l'écoulement transversal (19) vers le sens d'écoulement du flux de gaz.

13. Procédé selon l'une quelconque des revendications 10 à 12, comprenant en outre la récupération d'énergie à partir du liquide et/ou du gaz, la récupération d'énergie à partir du liquide comprenant l'éjection du liquide d'absorption et/ou du liquide de lavage, drainé depuis une couche de liquide (32) par des diffuseurs (29) dans le tambour (7) dans un sens opposé à la rotation du tambour (7) de manière qu'une commande hydraulique du tambour (7) est obtenue.

14. Procédé selon l'une quelconque des revendications 10 à 13 comprenant la rotation du tambour par une commande hydraulique à partir du liquide drainé par les diffuseurs (29) depuis le tambour (7).

15. Procédé selon l'une quelconque des revendications 10 à 14, comprenant en outre la récupération d'énergie à partir du liquide et/ou du gaz, l'énergie étant récupérée à partir du gaz par une turbine à gaz.
